# EUROPEAN PATENT APPLICATION

(11) **EP 4 654 450 A1**
(43) Date of publication of application: **26.11.2025**
(21) Application number: 23920858.0
(22) Date of filing: 04.12.2023
(51) Int. Cl.: H02M 1/32, H02M 3/156, H02M 7/537, G01K 7/22, G01K 1/16

(54) **POWER TUBE TEMPERATURE MEASUREMENT CIRCUIT, INVERTER, AND INVERTER DERATING METHOD**

(30) Priority: 09.02.2023 CN 202310136170
(71) Applicant: Huawei Digital Power Technologies Co., Ltd., Shenzhen, Guangdong 518043 (CN)
(72) Inventor: LIU, Weiping, Shenzhen, Guangdong 518043 (CN); LIN, Yuxuan, Shenzhen, Guangdong 518043 (CN); ZHANG, Ruixiang, Shenzhen, Guangdong 518043 (CN)
(74) Representative: Gill Jennings & Every LLP
(86) International application number: PCT/CN2023/136132
(87) International publication number: WO 2024/164669

(57) **Abstract**

This application provides a power transistor temperature detection circuit, an inverter, and an inverter derating method. In each DC/DC conversion circuit and an inverter circuit in the inverter, one temperature detection unit is correspondingly configured for at least one power transistor in each circuit, and the temperature detection unit is disposed near the power transistor. A temperature of the power transistor is detected, to implement detection on the temperature of the power transistor. After receiving temperature information fed back by the temperature detection unit, a sampling control unit controls, based on a preset condition, a corresponding DC/DC conversion circuit to perform derating, so that a temperature of a corresponding power transistor drops to below a safe temperature, and therefore, safe use of the power transistor and stable and efficient operation of the inverter are ensured.

## Description

This application claims priority to Chinese Patent Application No. 202310136170.1, filed with the China National Intellectual Property Administration on February 9, 2023 and entitled "POWER TRANSISTOR TEMPERATURE DETECTION CIRCUIT, INVERTER, AND INVERTER DERATING METHOD", which is incorporated herein by reference in its entirety.

### TECHNICAL FIELD

This application relates to the inverter field, and in particular, to a power transistor temperature detection circuit, an inverter, and an inverter derating method.

### BACKGROUND

As environment and energy crises are global problems, new energy such as wind and solar energy naturally becomes one of important ways to improve an energy structure and resolve the energy problem. As an important part of a new energy power generation solution, inverters are developing rapidly toward high efficiency, reliability, low costs, and the like.

Efficiency and temperature control are key control points for ensuring long-term stable and efficient working of the inverter, and stable working of a power transistor is a basis for ensuring safe working of the inverter. However, because the power transistor works at a high frequency for a long time, a component may be damaged due to aging and excessively high working temperature. During actual application, attention needs to be paid to a working condition of the power transistor to adjust input power and output power of the inverter, to reduce working pressure of the power transistor, ensure that the temperature of the power transistor does not exceed a limit, and balance efficiency and reliability.

### SUMMARY

This application provides a temperature detection circuit, an inverter, and an inverter derating method, so that safe use of electrical components such as a power transistor on the inverter can be ensured on a basis of ensuring high comprehensive efficiency.

According to a first aspect, this application provides a power transistor temperature detection circuit, including a temperature detection unit and a sampling control unit. The temperature detection unit is disposed on a same PCB as a power transistor, and the power transistor includes at least one first power transistor distributed in at least one DC/DC conversion circuit. The temperature detection unit is disposed in a one-to-one correspondence with the first power transistor, and is configured to: detect a temperature of the first power transistor, and feed back temperature information of the first power transistor to the sampling control unit. The sampling control unit is configured to perform, based on the temperature information of the first power transistor, output power control on the DC/DC conversion circuit in which the first power transistor is located.

It may be understood that, a DC/DC conversion circuit is generally disposed in an inverter as a front-end circuit of an inverter circuit. The DC/DC conversion circuit performs voltage boosting/bucking processing on a direct current transmitted by a new energy power generation device, and transmits a processed direct current to the inverter circuit. The inverter circuit converts the received direct current into an alternating current, and transmits the alternating current to a power grid or a load. When the new energy power generation device has an electric energy yield or a long continuous energy yield time, output power of the DC/DC conversion circuit and the inverter circuit increase correspondingly, or a working time thereof is prolonged correspondingly. In this case, power transistors of the DC/DC conversion circuit and the inverter circuit bear a high working pressure, which may cause temperatures to increase to exceeding a specific threshold. In serious cases, based on factors such as a use environment and use duration of the power transistor, the temperature of the power transistor exceeds the specific threshold, which may directly result in a failure of the power transistor, and may further result in a risk of burning the inverter or the like. Therefore, the power transistor temperature detection circuit needs to be disposed on the PCB on which the power transistor is located, to detect the temperature of the power transistor. Output power control is performed on the DC/DC conversion circuit based on temperature information. Such power control is generally to reduce the output power of the DC/DC conversion circuit, to ensure safety of the power transistors of the DC/DC conversion circuit and the inverter circuit.

Therefore, to control the output power of the DC/DC conversion circuit in a fine-grained manner, in this application, one power transistor temperature detection circuit is disposed corresponding to at least one power transistor in each DC/DC conversion circuit. Whether power control needs to be performed on the corresponding DC/DC conversion circuit may be determined based on temperature information fed back by a temperature detection unit in the power transistor temperature detection circuit. In such a fine-grained and independent detection temperature detection circuit, a power control requirement of each DC/DC conversion circuit can be accurately determined, and independent power control can be performed on each DC/DC conversion circuit based on the independent power control requirement of each DC/DC conversion circuit without interfering with each other.

It should be understood that, because output power of each DC/DC conversion circuit in a normal working state may vary, specifications of power transistors configured in DC/DC conversion circuits may also vary.

In a possible implementation, the power transistor further includes at least one second power transistor distributed in the inverter circuit. The temperature detection unit is disposed in a one-to-one correspondence with the second power transistor, and is configured to: detect a temperature of the second power transistor, and feed back temperature information of the second power transistor to the sampling control unit. The sampling control unit is configured to perform output power control on a part or all of the at least one DC/DC conversion circuit based on the temperature information of the second power transistor.

It may be understood that, generally, input power of the inverter circuit is a sum of output power of the front-end DC/DC conversion circuit. Therefore, a specification of a power transistor in the inverter circuit is generally different from the specification of the power transistor in the front-end DC/DC conversion circuit. Under a condition of ensuring that the front-end power transistor in the DC/DC conversion circuit is in a safe working state, it may not necessarily be ensured that the power transistor in the inverter circuit is in a safe working state. Therefore, one or more power transistors may be selected from the inverter circuit for temperature detection. When a temperature of the power transistor in the inverter circuit is in an exception state, the input power of the inverter circuit needs to be reduced, to enable the power transistor in the inverter circuit to return to a normal working state. It should be understood that there may be a plurality of policies for reducing the input power of the inverter circuit. Output power of the part of the front-end DC/DC conversion circuits may be reduced, or output power of all of the front-end DC/DC conversion circuits may be reduced. Different control policies are set, so that, in addition to ensuring safe use of the power transistor in the inverter circuit as much as possible and ensuring normal working of the inverter circuit, power conversion control can be performed as little as possible, to reduce a power loss caused by frequent control.

In a possible implementation, the sampling control unit is configured to: when the temperature of the second power transistor exceeds a first temperature threshold, the temperature of the second power transistor exceeds a second temperature threshold and is less than a first temperature threshold for a continuous period of time, or a temperature change of the second power transistor in a unit time exceeds a sudden change threshold, control the part or all of the at least one DC/DC conversion circuit to reduce output power, where the first temperature threshold is greater than the second temperature threshold.

It may be understood that values of the first temperature threshold and the second temperature threshold, duration of the continuous period of time, and a setting of the sudden change threshold may be comprehensively considered based on an overall working environment of the used inverter and the specification and a characteristic of the power transistor. Therefore, temperature exception conditions of the power transistors of the DC/DC circuits may vary based on respective working conditions that are different. In other words, first temperature thresholds, second temperature thresholds, duration of continuous periods of time, and sudden change thresholds that correspond to the power transistors of the DC/DC circuit may be different. Similarly, first temperature thresholds, second temperature thresholds, duration of continuous periods of time, and sudden change thresholds of the power transistors in the inverter circuit may also be different.

It should be noted that, the first temperature threshold may be set to be close to a limit temperature of the power transistor. When the temperature of the power transistor exceeds the limit temperature, the power transistor may be damaged immediately. Therefore, when the temperature of the power transistor exceeds the first temperature threshold, it is an urgent case, and output power reduction control needs to be performed immediately on the DC/DC conversion circuit in which the power transistor is located. The second temperature threshold is also set close to the limit temperature of the power transistor, but is less than the first temperature threshold. When the temperature of the power transistor exceeds the second temperature threshold for a continuous period of time, it means that the power transistor is in a high-pressure working state in the continuous period of time. If the high-pressure working state is maintained continuously, the temperature of the power transistor may be increased to exceeding the first temperature threshold. To reduce occurrence of such an urgent case as much as possible, in this case, output power reduction control also needs to be performed on the DC/DC conversion circuit in which the power transistor is located, to reduce a working pressure of the power transistor, reduce the temperature of the power transistor, ensure safety of the power transistor, and therefore, implement safe and stable operation of the inverter. When the temperature of the power transistor changes greatly in a unit time, it means that the temperature of the power transistor may quickly increase to exceeding the second temperature threshold or even the first temperature threshold. In this case, output power reduction control may also be performed on the DC/DC conversion circuit in which the power transistor is located.

In a possible implementation, the sampling control unit is configured to: when the temperature of the second power transistor exceeds the first temperature threshold, control all of the at least one DC/DC conversion circuit to reduce output power; or when the temperature of the second power transistor exceeds the second temperature threshold and is less than the first temperature threshold for a continuous period of time, or when the temperature change of the second power transistor in the unit time exceeds the sudden change threshold, control a DC/DC conversion circuit in which the temperature of the first power transistor exceeds a third temperature threshold among the at least one DC/DC conversion circuit to reduce output power, where the third temperature threshold is less than the second temperature threshold.

It should be understood that, when an exception occurs on the temperature of the power transistor in the inverter circuit, an objective of performing power control on the front-end DC/DC conversion circuit is to reduce the temperature of the power transistor in the inverter circuit to a safe range. When the temperature of the power transistor in the inverter circuit exceeds the first temperature threshold, it is an urgent case, and it may be selected to perform output power reduction control on all of the front-end DC/DC conversion circuits, so that the input power of the inverter circuit can be reduced quickly, to reduce the working pressure of the power transistor as soon as possible, and therefore, ensure the safety of the power transistor. When the temperature of the power transistor in the inverter circuit exceeds the second temperature threshold only in the period of time or a temperature change in the unit time exceeds the sudden change threshold, it may be selected to perform output power reduction control on a part of circuits among the front-end DC/DC conversion circuits, and a selection criterion is whether the temperature exceeds the third temperature threshold. In this case, output power reduction control needs to be performed on a DC/DC conversion circuit in which the temperature of the power transistor exceeds the third temperature threshold, where the third temperature threshold is less than the second temperature threshold. During actual application, a difference between the third temperature threshold and the second temperature threshold may be set based on a specific situation. This is not limited in this application.

In a possible implementation, the temperature detection unit is connected to the power transistor corresponding to the temperature detection unit through a thermally conductive structure.

The power transistor and the temperature detection unit are connected through the thermally conductive structure, so that a temperature difference between a detection point of the temperature detection unit and the temperature of the power transistor can be reduced, and accuracy of detecting, by the temperature detection unit, the temperature of the power transistor corresponding to the temperature detection unit can be further improved. In this design of the thermally conductive structure, the temperature of the power transistor can be directly measured, instead of obtaining a temperature of another temperature measurement point, and a rough value of the temperature of the power transistor is obtained through coefficient conversion. This avoids using a power transistor integrated with an NTC (Negative Temperature Coefficient, negative temperature coefficient) with higher costs, and achieves effect of accurate detection and fine-grained control.

In a possible implementation, the thermally conductive structure is disposed inside or on a surface of the PCB, a pin of the power transistor is connected to the thermally conductive structure, and the temperature detection unit is attached to the thermally conductive structure.

It should be noted that the foregoing implementations are several possible implementations included in this application. The foregoing implementations may be separately implemented, or may be combined and then implemented. This is not limited in this application.

According to a second aspect, this application provides an inverter, including at least one temperature detection unit, a sampling control unit, at least one DC/DC conversion circuit, and an inverter circuit. The DC/DC conversion circuit is configured to: adjust a direct current that is input to the DC/DC conversion circuit, and then output an adjusted direct current to the inverter circuit. The inverter circuit is configured to: receive a direct current that is output by the at least one DC/DC conversion circuit, and convert the received direct current into an alternating current. One temperature detection unit is correspondingly configured for at least one first power transistor in each DC/DC conversion circuit. The temperature detection unit is disposed on a same PCB as the first power transistor corresponding to the temperature detection unit, and is configured to: detect a temperature of the first power transistor, and feed back temperature information of the first power transistor to the sampling control unit. The sampling control unit is configured to perform, based on the temperature information of the first power transistor, output power control on the DC/DC conversion circuit in which the first power transistor is located.

It should be understood that, during actual application, a front-end circuit of the inverter circuit may be one or more DC/DC conversion circuits. To control output power of the DC/DC conversion circuit in a fine-grained manner, one power transistor temperature detection circuit should be disposed corresponding to at least one power transistor in each DC/DC conversion circuit and the inverter circuit. Whether power control needs to be performed on the DC/DC conversion circuit may be determined based on temperature data fed back by a temperature detection unit in the power transistor temperature detection circuit.

In a possible implementation, one temperature detection unit is correspondingly configured for at least one second power transistor in the inverter circuit. The temperature detection unit is disposed on a same PCB as the second power transistor corresponding to the temperature detection unit, and is configured to: detect a temperature of the second power transistor, and feed back temperature information of the second power transistor to the sampling control unit. The sampling control unit is configured to perform output power control on a part or all of the at least one DC/DC conversion circuit based on the temperature information of the second power transistor.

It may be understood that, generally, input power of the inverter circuit is a sum of output power of the front-end DC/DC conversion circuit. When the temperature of the power transistor in the inverter circuit is in an exception state, the input power of the inverter circuit needs to be reduced, to enable the power transistor in the inverter circuit to return to a normal working state. It should be understood that there may be a plurality of policies for reducing the input power of the inverter circuit. Output power of the part of front-end DC/DC conversion circuits may be reduced, or output power of all of front-end DC/DC conversion circuits may be reduced. Different control policies are set, so that, in addition to ensuring safe use of the power transistor in the inverter circuit as much as possible and ensuring normal working of the inverter circuit, power conversion control can be performed as little as possible, to reduce a power loss caused by frequent control.

In a possible implementation, the sampling control unit is configured to: when the temperature of the first power transistor exceeds a first temperature threshold, the temperature of the first power transistor exceeds a second temperature threshold and is less than a first temperature threshold for a continuous period of time, or a temperature change of the first power transistor in a unit time exceeds a sudden change threshold, control the DC/DC conversion circuit in which the first power transistor is located to reduce output power, where the first temperature threshold is greater than the second temperature threshold.

In a possible implementation, the sampling control unit is configured to: when the temperature of the second power transistor exceeds a first temperature threshold, the temperature of the second power transistor exceeds a second temperature threshold and is less than a first temperature threshold for a continuous period of time, or a temperature change of the second power transistor in a unit time exceeds a sudden change threshold, control a part or all of the at least one DC/DC conversion circuit to reduce output power, where the first temperature threshold is greater than the second temperature threshold.

It may be understood that values of the first temperature threshold and the second temperature threshold, duration of the continuous period of time, and a setting of the sudden change threshold may be comprehensively considered based on an overall working environment of the used inverter and a specification and a characteristic of the power transistor. Therefore, temperature exception conditions of power transistors of the DC/DC circuits may vary based on respective specifications and preset working conditions that are different. In other words, first temperature thresholds, second temperature thresholds, duration of continuous periods of time, and sudden change thresholds that correspond to the power transistors of the DC/DC circuit may be different. Similarly, first temperature thresholds, second temperature thresholds, duration of continuous periods of time, and sudden change thresholds of power transistors in the inverter circuit may also be different.

In a possible implementation, the sampling control unit is configured to: when the temperature of the second power transistor exceeds the first temperature threshold, control all of the at least one DC/DC conversion circuit to reduce output power; or when the temperature of the second power transistor exceeds the second temperature threshold and is less than the first temperature threshold for a continuous period of time, or when the temperature change of the second power transistor in the unit time exceeds the sudden change threshold, control a DC/DC conversion circuit in which the temperature of the first power transistor exceeds a third temperature threshold among the at least one DC/DC conversion circuit to reduce output power, where the third temperature threshold is less than the second temperature threshold.

It should be understood that, when an exception occurs on the temperature of the power transistor in the inverter circuit, an objective of performing power control on the front-end DC/DC conversion circuit is to reduce the temperature of the power transistor in the inverter circuit to a safe range. When the temperature of the power transistor in the inverter circuit exceeds the first temperature threshold, it is an urgent case, and it may be selected to perform output power reduction control on all of the front-end DC/DC conversion circuits, so that the input power of the inverter circuit can be reduced quickly, to reduce the working pressure of the power transistor as soon as possible, and therefore, ensure the safety of the power transistor. When the temperature of the power transistor in the inverter circuit exceeds the second temperature threshold only in the period of time or a temperature change in the unit time exceeds the sudden change threshold, it may be selected to perform output power reduction control on a part of circuits among the front-end DC/DC conversion circuits, and a selection criterion is whether the temperature exceeds the third temperature threshold. In this case, output power reduction control needs to be performed on a DC/DC conversion circuit in which the temperature of the power transistor exceeds the third temperature threshold, where the third temperature threshold is less than the second temperature threshold. A difference between the third temperature threshold and the second temperature threshold may be set based on a specific situation. This is not limited in this application.

It should be noted that the foregoing implementations are several possible implementations included in this application. The foregoing implementations may be separately implemented, or may be combined and then implemented. This is not limited in this application.

According to a third aspect, this application provides an inverter temperature detection and derating method. An inverter includes at least one temperature detection unit, a sampling control unit, at least one DC/DC conversion circuit, and an inverter circuit, and one temperature detection unit is correspondingly configured for at least one first power transistor in each circuit of the at least one DC/DC conversion circuit. The method includes:
the temperature detection unit detects a temperature of the first power transistor corresponding to the temperature detection unit;
the temperature detection unit feeds back the temperature that is of the corresponding power transistor and that is detected by the temperature detection unit to the sampling control unit; and
the sampling control unit performs, based on temperature information of the power transistor, output power control on the DC/DC conversion circuit in which the first power transistor is located.

It should be understood that, according to the method provided in this application, independent derating of each DC/DC conversion circuit can be implemented. At least one power transistor is selected from each DC/DC conversion circuit to configure one temperature detection unit. The temperature detection unit collects a temperature of each power transistor, and independently feeds back the temperature to the sampling control unit. The sampling control unit independently performs power control on each DC/DC conversion circuit based on the feedback of the temperature detection unit, to ensure safe use of the power transistor.

In a possible embodiment, when the temperature of the first power transistor exceeds a first temperature threshold, the temperature of the power transistor exceeds a second temperature threshold and is less than a first temperature threshold for a continuous period of time, or a temperature change of the power transistor in a unit time exceeds a sudden change threshold, the sampling control unit controls the DC/DC conversion circuit in which the first power transistor is located to reduce output power, where the first temperature threshold is greater than the second temperature threshold.

It should be understood that, in the method provided in this application, different output power reduction control policies may be selected based on different working conditions of the power transistor. The first temperature threshold, the second temperature threshold, and the sudden change threshold may be specifically set based on a specific situation, to ensure that derating control is performed on a corresponding DC/DC conversion circuit in a timely manner.

In a possible embodiment, one temperature detection unit is correspondingly configured for at least one second power transistor in the inverter circuit. When a temperature of the second power transistor exceeds the first temperature threshold, the temperature of the power transistor exceeds the second temperature threshold and is less than the first temperature threshold for a continuous period of time, or a temperature change of the power transistor in a unit time exceeds the sudden change threshold, the sampling control unit controls a part or all of the at least one DC/DC conversion circuit to reduce output power, where the first temperature threshold is greater than the second temperature threshold.

It should be understood that, in the method provided in this application, derating processing may be further performed on the inverter circuit on a basis of monitoring a working condition of the inverter circuit. A specific manner is to reduce output power of all or the part of the front-end DC/DC conversion circuits, that is, input power of the inverter. The first temperature threshold, the second temperature threshold, and the sudden change threshold of the power transistor in the inverter circuit also need to be specifically set based on a specific situation, to trigger a derating control action at an optimal time. A specific setting is not limited in this application.

In a possible embodiment, when the temperature of the second power transistor exceeds the first temperature threshold, the sampling control unit controls all of the at least one DC/DC conversion circuit to reduce output power; or when the temperature of the power transistor exceeds the second temperature threshold and is less than the first temperature threshold for a continuous period of time, or when the temperature change of the power transistor in the unit time exceeds the sudden change threshold, controlling a DC/DC conversion circuit in which the temperature of the first power transistor exceeds a third temperature threshold among the at least one DC/DC conversion circuit to reduce output power, where the third temperature threshold is less than the second temperature threshold.

It should be understood that, in the method provided in this application, because there is a means of controlling each DC/DC conversion circuit in a fine-grained manner to perform independent derating, when derating control is performed on the inverter circuit, a policy of performing output power reduction control on the front-end DC/DC conversion circuit may also be specifically selected. When the temperature of the power transistor in the inverter circuit exceeds the first temperature threshold, it is selected to perform output power reduction control on all of the front-end DC/DC conversion circuits, so that the input power of the inverter circuit can be reduced quickly, to reduce a working pressure of the power transistor as soon as possible, and therefore, ensure safety of the power transistor. When the temperature of the power transistor in the inverter circuit exceeds the second temperature threshold only in the period of time or a temperature change in the unit time exceeds the sudden change threshold, it may be selected to perform output power reduction control on a part of circuits among the front-end DC/DC conversion circuits, and a selection criterion is whether the temperature exceeds the third temperature threshold, where the third temperature threshold is less than the second temperature threshold. During actual application, a difference between the third temperature threshold and the second temperature threshold may be set based on a specific situation. This is not limited in this application.

### BRIEF DESCRIPTION OF DRAWINGS

FIG. 1 is a schematic of a power transistor temperature detection circuit according to an embodiment of this application;
FIG. 2 is a schematic of a power transistor temperature detection circuit with a thermally conductive structure according to an embodiment of this application;
FIG. 3 is a diagram of a manner of disposing a thermally conductive structure on a PCB according to an embodiment of this application;
FIG. 4 is a schematic of an inverter according to an embodiment of this application; and
FIG. 5 is a flowchart of an inverter derating method according to an embodiment of this application.

### DESCRIPTION OF EMBODIMENTS

For ease of understanding, terms in embodiments of this application are first explained.

And/Or: For example, A and/or B means that there are three cases: A, B, or A and B.

"A plurality of" means two or more.

"Connect" should be understood in a broad sense. For example, that A is connected to B may be that A is directly connected to B, or may be that A is indirectly connected to B through an intermediate medium.

The following clearly describes specific implementations of this application with reference to the accompanying drawings.

As environment and energy crises are global problems, a new energy power generation solution naturally becomes one of important ways to improve an energy structure and resolve the energy problem. As an important part of the new energy power generation solution, inverters are developing rapidly toward high efficiency, reliability, low costs, and the like.

Efficiency and temperature control are key control points for ensuring long-term stable and efficient working of the inverter. Generally, a temperature of a power transistor needs to be collected, and a corresponding control policy of reducing output power is used based on a temperature threshold or the like, to ensure that the power transistor works normally. Therefore, stable and normal operation of the inverter is ensured, and working efficiency and reliability of the inverter is improved.

Based on this, an embodiment of this application first provides a power transistor temperature detection circuit. The circuit may be used in an inverter. Generally, the inverter is configured to: convert a direct current transmitted by a new energy power generation device into an alternating current, and finally transmit the alternating current to a power grid, a load, or the like.

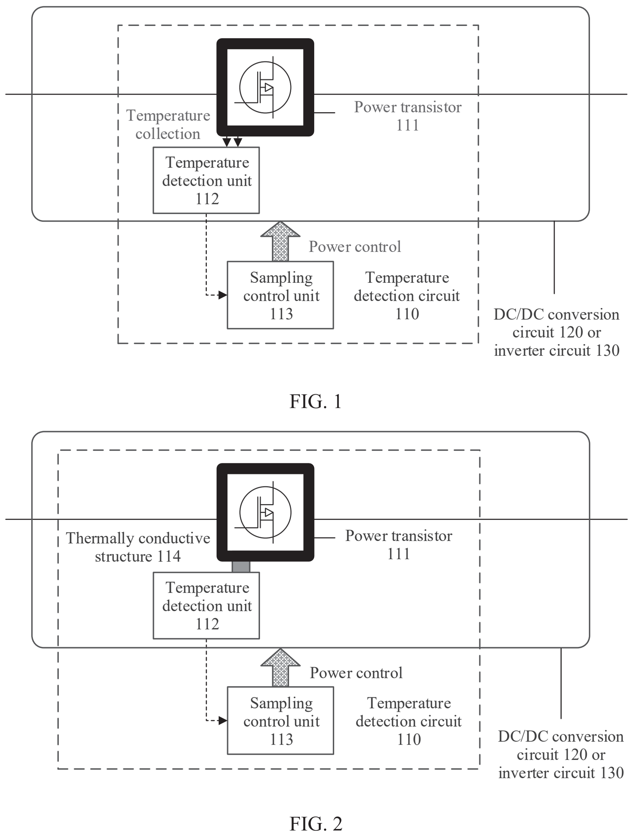

As shown in FIG. 1, a temperature detection circuit 110 is disposed in an inverter. Specifically, the temperature detection circuit 110 is disposed in a DC/DC conversion circuit 120 or an inverter circuit 130 of the inverter. The power transistor temperature detection circuit 110 includes a temperature detection unit 112 and a sampling control unit 113. When a detected power transistor 111 is distributed in at least one DC/DC conversion circuit 120, the temperature detection unit 112 is disposed in a one-to-one correspondence with the power transistor 111. The temperature detection unit 112 may detect a temperature of the at least one power transistor 111 in the DC/DC conversion circuit 120. The temperature detection unit 112 is on a same PCB as the power transistor 111, and is generally disposed near the power transistor 111. After detecting the temperature of the power transistor 111, the temperature detection unit 112 may feed back detected temperature information to the sampling control unit 113. After receiving the temperature information, the sampling control unit 113 may perform, based on the temperature information, output power control on the DC/DC conversion circuit 120 in which the power transistor 111 is located, to achieve an objective of adjusting the temperature of the power transistor.

When a detected power transistor 111 is distributed in the inverter circuit 130 of the inverter, the power transistor temperature detection circuit 110 includes the temperature detection unit 112 and the sampling control unit 113. The temperature detection unit 111 may detect a temperature of at least one power transistor in the inverter circuit 130. The temperature detection unit 112 is disposed in a one-to-one correspondence with the power transistor 111. The temperature detection unit 112 is on a same PCB as the power transistor 111, and is generally disposed near the power transistor 111. After detecting the temperature of the power transistor 111, the temperature detection unit 112 may feed back detected temperature information to the sampling control unit 113. After receiving the temperature information, the sampling control unit 113 may perform, based on the temperature information, output power control on a part or all of DC/DC conversion circuits 120, to achieve an objective of adjusting the temperature of the power transistor 111 in the inverter circuit 130.

It should be noted that, output power of the inverter circuit 130 is determined by input power of the inverter circuit 130, and the input power of the inverter circuit 130 is equal to total output power of the front-end DC/DC conversion circuits 120. Therefore, the output power of the inverter circuit 130 can be controlled by controlling the output power of the front-end DC/DC conversion circuits 120, to adjust the temperature of the power transistor 111 in the inverter circuit 130, and ensure normal working of the power transistor 111 and stable operation of the inverter.

It should be noted that FIG. 1 is merely intended to describe a connection relationship in the temperature detection circuit as an example, and is not intended to specifically limit connection positions, specific structures, and quantities of components and units.

Optionally, as shown in FIG. 2, the power transistor 111 is connected to the temperature detection unit 112 through a thermally conductive structure 114. The temperature information of the power transistor 111 can be more accurately detected through the connection of the thermally conductive structure.

It should be noted that FIG. 2 is merely intended to describe a connection relationship in the temperature detection circuit as an example, and is not intended to specifically limit connection positions, specific structures, and quantities of components and units.

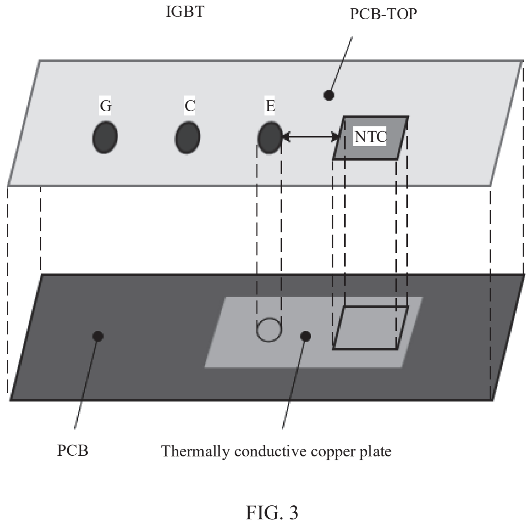

Optionally, as shown in FIG. 3, the power transistor may be an insulated gate bipolar transistor (IGBT), the temperature detection unit may be an NTC, the thermally conductive structure may be a thermally conductive copper plate, the thermally conductive copper plate may be attached to an upper surface or a lower surface of the PCB, or may be embedded into the PCB, a pin of the IGBT is connected to the thermally conductive copper plate, and the temperature detection unit is attached to the thermally conductive copper plate. Because the NTC occupies small space, the NTC may be placed at a safe position close to the power transistor, and a temperature change of the power transistor may be reflected in a temperature change of the NTC in a timely manner. A temperature of the NTC is in a one-to-one correspondence with a resistance value of the NTC. The resistance value of the NTC is measured, so that the temperature of the NTC can be known. That is, the temperature of the power transistor is measured.

It should be noted that FIG. 3 is merely intended to describe a connection relationship in the temperature detection circuit as an example, and is not intended to specifically limit connection positions, specific structures, and quantities of components and units, or to limit selection of the components.

The temperature detection circuit provided in the foregoing embodiment performs power control on the DC/DC conversion circuit based on the temperature of the power transistor on the DC/DC conversion circuit or the inverter circuit in the following several manners.

First power control manner: In some implementations, a temperature detection unit is disposed corresponding to at least one power transistor in each DC/DC conversion circuit. When the temperature of the power transistor 111 in the DC/DC conversion circuit 120 exceeds a first temperature threshold T₁, exceeds a second temperature threshold T₂ and is less than a first temperature threshold T₁ for a continuous period of time tₘ, or a temperature change in a unit time exceeds a sudden change threshold ΔTₘ, the sampling control unit may directly control the DC/DC conversion circuit 120 in which the power transistor is located to reduce output power. In this derating policy, the temperature of the power transistor 111 in the DC/DC conversion circuit 120 can be effectively controlled, so that normal working of the DC/DC conversion circuit 120 is ensured, and the power output by the DC/DC conversion circuit 120 is controlled to be not excessively high. In this way, input power received by the inverter circuit 130 is not excessively high, and normal working of the inverter circuit 130 can be ensured to some extent.

Second power control manner: In some implementations, a temperature detection unit is also disposed corresponding to the power transistor in the inverter circuit. When the temperature of power transistor 111 in the inverter circuit 130 exceeds a first temperature threshold T₁, exceeds a second temperature threshold T₂ and is less than a first temperature threshold T₁ for a continuous period of time tₘ, or a temperature change in a unit time exceeds a sudden change threshold ΔTₘ, the sampling control unit 113 may control a part of or all circuits of DC/DC conversion circuits 120 to reduce output power. This derating policy set for the inverter circuit 130 may be used to cope with a special case in which the power transistor 111 in the DC/DC conversion circuit 120 works normally but the power transistor 111 in the inverter circuit 130 works abnormally, and additional costs are not much, so that stable and efficient operation of the inverter can be further ensured.

Third power control manner: In some implementations, power control may be performed by considering both temperatures of the power transistor in the inverter circuit and the power transistor in the DC/DC conversion circuit. When the temperature of the power transistor 111 in the inverter circuit 130 exceeds the first temperature threshold T1, the sampling control unit may control all circuits of the DC/DC conversion circuits 120 to reduce the output power. Alternatively, when the temperature of the power transistor 111 in the inverter circuit 130 exceeds the second temperature threshold T2 and is less than the first temperature threshold T1, or the temperature change in the unit time tₘ exceeds the sudden change threshold ΔTₘ, the sampling control unit may control a circuit in which the temperature of the power transistor 111 in the DC/DC conversion circuit 120 exceeds a third temperature threshold T₃ to reduce output power. In this derating policy, different measures are taken for different temperature conditions of power transistors 111 in the inverter circuit 130. Such a fine-grained control policy can both ensure normal operation of the inverter and reduce energy consumption caused by frequent derating control, to further improve overall efficiency of the inverter.

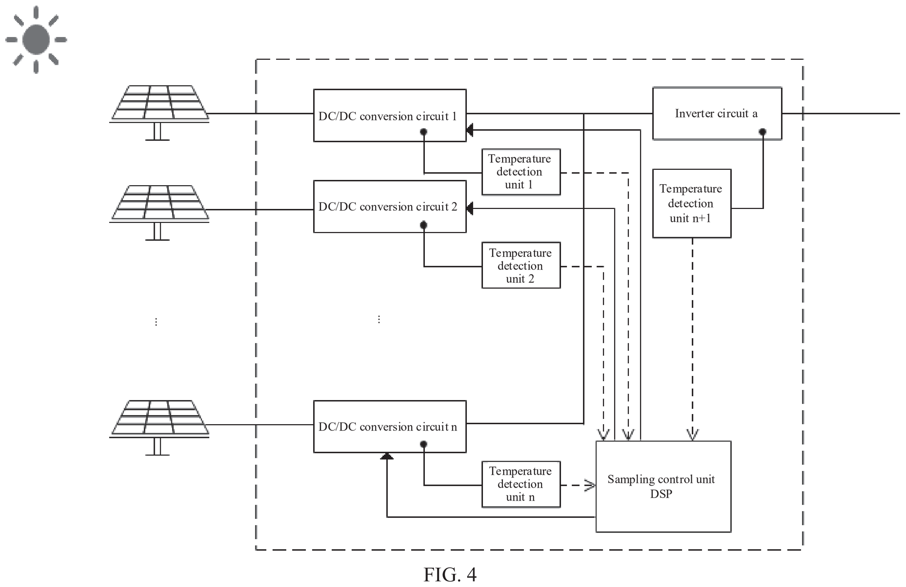

In the foregoing control manners, a flexible derating policy is implemented by setting different parameters such as temperature thresholds. In a specific implementation process, one of the control manners may be used, or the foregoing several control manners may be combined for implementation. This is not limited in this application. In addition, for the first temperature threshold T₁, the second temperature threshold T₂, the third temperature threshold T₃, the time threshold tₘ, and the temperature change threshold ΔTₘ mentioned in this embodiment of this application, where T₁>T₂>T₃, T₁, T₂, T₃, tₘ, and ΔTₘ may all be set based on an experimental test, a comprehensive experimental result, and a specific safety control requirement for the inverter. This is not limited in this application either. An embodiment of this application further provides an inverter. Refer to FIG. 4. Photovoltaic power generation is used as an example. A specific application manner of the temperature detection circuit provided in this application on the inverter may be understood, for example, distribution of a sampling control unit and a temperature detection unit on each DC/DC conversion circuit and inverter circuit, and a connection relationship between units.

In the inverter shown in FIG. 4, a DC/DC conversion circuit is configured to: receive a direct current generated by a solar photovoltaic panel, perform voltage boosting/bucking processing on the received direct current, and output a processed direct current to the inverter circuit. The inverter circuit receives the direct current that is output by the front-end DC/DC conversion circuit, and converts the received direct current into an alternating current for output.

FIG. 4 shows an inverter with 1 to n DC/DC conversion circuits. During actual application, the inverter may alternatively have only one DC/DC conversion circuit. Each DC/DC conversion circuit and the inverter circuit may each have one temperature detection unit to perform temperature detection on one of power transistors, or may each have a plurality of temperature detection units to perform temperature detection on a plurality of power transistors, where the temperature detection unit is disposed in a one-to-one correspondence with the power transistor.

It should be noted that FIG. 4 is merely intended to describe a connection relationship between some units in the inverter in this embodiment as an example, and is not intended to specifically limit connection positions, specific structures, and quantities of devices, components and units.

Optionally, at least one temperature detection unit is disposed on each DC/DC conversion circuit. The temperature detection unit is responsible for detecting a temperature of at least one power transistor in the DC/DC conversion circuit and feeding back detected temperature information to a sampling control unit. After receiving the temperature information, the sampling control unit may perform output power control on the DC/DC conversion circuit based on the temperature information, to achieve an objective of adjusting the temperature of the power transistor. For a specific manner in which the sampling control unit performs output power control on the DC/DC conversion circuit, refer to the first power control manner provided in the foregoing embodiment.

Optionally, at least one temperature detection unit is disposed on the inverter circuit. The temperature detection unit is responsible for detecting a temperature of at least one power transistor in the inverter circuit and feeding back detected temperature information to the sampling control unit. After receiving the temperature information, the sampling control unit may perform output power control on the part or all of DC/DC conversion circuits based on the temperature information, to achieve an objective of adjusting the temperature of the power transistor in the inverter circuit. For a specific manner in which the sampling control unit performs output power control on the DC/DC conversion circuit, refer to the first power control manner, the second power control manner, and/or the third power control manner provided in the foregoing embodiment.

An embodiment of this application further provides an inverter derating method. The method is applied to the inverter in the foregoing embodiment.

A specific implementation method is as follows: A temperature detection unit detects a temperature of a power transistor in a DC/DC conversion circuit, and feeds back temperature information of the power transistor to a sampling control unit. The sampling control unit performs output power control on the DC/DC conversion circuit based on the temperature information of the power transistor. For a specific manner in which the sampling control unit performs output power control on the DC/DC conversion circuit, refer to the first power control manner provided in the foregoing embodiment.

Optionally, a temperature of a power transistor in an inverter circuit may be further detected by using a temperature detection unit configured corresponding to the power transistor in the inverter circuit, and temperature information of the power transistor may be fed back to the sampling control unit. The sampling control unit performs output power control on all or a part of DC/DC conversion circuits based on the temperature information of the power transistor. For a specific manner in which the sampling control unit performs output power control on the DC/DC conversion circuit, refer to the first power control manner, the second power control manner, and/or the third power control manner provided in the foregoing embodiment.

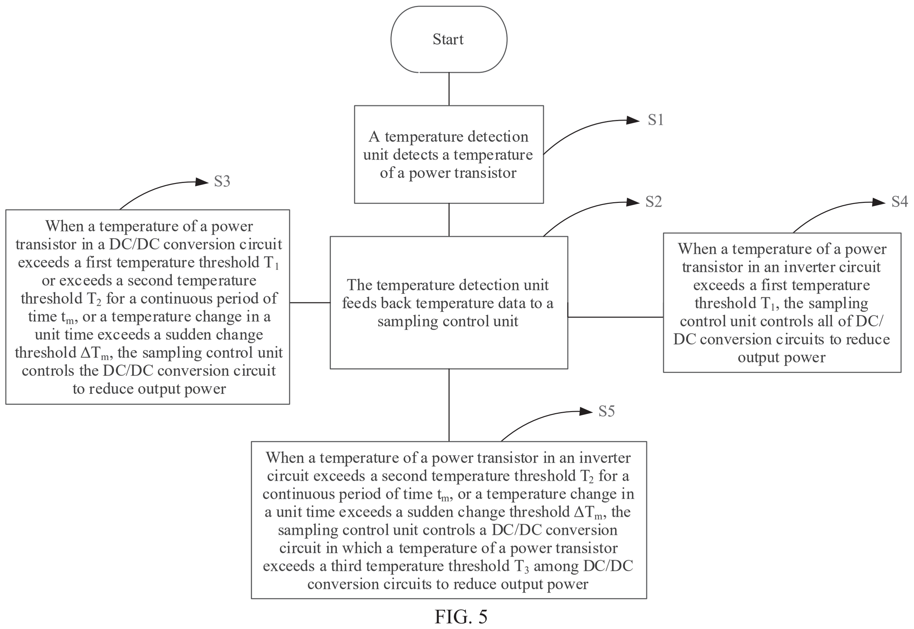

In a specific embodiment, for a process of the foregoing inverter derating method, refer to FIG. 5.

First step S1: The temperature detection unit detects the temperature of the power transistor.

Second step S2: The temperature detection unit feeds back the detected temperature information to the sampling control unit, and proceed to a third step S3, a fourth step S4, or a fifth step S5.

Third step S3: When the temperature of the power transistor in the DC/DC conversion circuit exceeds a first temperature threshold T₁ or exceeds a second temperature threshold T₂ for a continuous period of time tₘ, or a temperature change in a unit time exceeds a sudden change threshold ΔTₘ, the sampling control unit controls the DC/DC conversion circuit to reduce output power.

Fourth step S4: When the temperature of the power transistor in the inverter circuit exceeds a first temperature threshold T₁, the sampling control unit controls all of the DC/DC conversion circuits to reduce output power.

Fifth step S5: When the temperature of the power transistor in the inverter circuit exceeds a second temperature threshold T₂ for a continuous period of time tₘ, or a temperature change in a unit time exceeds a sudden change threshold ΔTₘ, the sampling control unit controls a DC/DC conversion circuit in which the temperature of the power transistor exceeds a third temperature threshold T₃ among the DC/DC conversion circuits to reduce output power.

Embodiments of this application are described in detail above. The principle and implementation of this application are described herein by using specific examples in this specification. The description about the foregoing embodiments is merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limitation on this application.

## Claims

1. A power transistor temperature detection circuit, comprising a temperature detection unit and a sampling control unit, wherein the temperature detection unit is disposed on a same printed circuit board (PCB) as a power transistor, and the power transistor comprises at least one first power transistor distributed in at least one direct current/direct current (DC/DC) conversion circuit;
the temperature detection unit is disposed in a one-to-one correspondence with the first power transistor, and is configured to: detect a temperature of the first power transistor, and feed back temperature information of the first power transistor to the sampling control unit; and
the sampling control unit is configured to perform, based on the temperature information of the first power transistor, output power control on the DC/DC conversion circuit in which the first power transistor is located.

2. The power transistor temperature detection circuit according to claim 1, wherein the power transistor further comprises at least one second power transistor distributed in an inverter circuit, and the temperature detection unit is disposed in a one-to-one correspondence with the second power transistor, and is configured to: detect a temperature of the second power transistor, and feed back temperature information of the second power transistor to the sampling control unit; and
the sampling control unit is configured to perform output power control on a part or all of the at least one DC/DC conversion circuit based on the temperature information of the second power transistor.

3. The power transistor temperature detection circuit according to claim 1, wherein the sampling control unit is configured to:
when the temperature of the first power transistor exceeds a first temperature threshold, the temperature of the first power transistor exceeds a second temperature threshold and is less than a first temperature threshold for a continuous period of time, or a temperature change of the first power transistor in a unit time exceeds a sudden change threshold, control the DC/DC conversion circuit in which the first power transistor is located to reduce output power, wherein the first temperature threshold is greater than the second temperature threshold.

4. The power transistor temperature detection circuit according to claim 2 or 3, wherein the sampling control unit is configured to:
when the temperature of the second power transistor exceeds the first temperature threshold, the temperature of the second power transistor exceeds the second temperature threshold and is less than the first temperature threshold for a continuous period of time, or a temperature change of the second power transistor in a unit time exceeds the sudden change threshold, control the part or all of the at least one DC/DC conversion circuit to reduce output power, wherein the first temperature threshold is greater than the second temperature threshold.

5. The power transistor temperature detection circuit according to claim 4, wherein the sampling control unit is configured to:
when the temperature of the second power transistor exceeds the first temperature threshold, control all of the at least one DC/DC conversion circuit to reduce output power; or
when the temperature of the second power transistor exceeds the second temperature threshold and is less than the first temperature threshold for a continuous period of time, or when the temperature change of the second power transistor in the unit time exceeds the sudden change threshold, control a DC/DC conversion circuit in which the temperature of the first power transistor exceeds a third temperature threshold among the at least one DC/DC conversion circuit to reduce output power, wherein the third temperature threshold is less than the second temperature threshold.

6. The power transistor temperature detection circuit according to any one of claims 1 to 5, wherein the temperature detection unit is connected to the power transistor corresponding to the temperature detection unit through a thermally conductive structure.

7. The power transistor temperature detection circuit according to claim 6, wherein the thermally conductive structure is disposed inside or on a surface of the PCB, a pin of the power transistor is connected to the thermally conductive structure, and the temperature detection unit is attached to the thermally conductive structure.

8. An inverter, comprising at least one temperature detection unit, a sampling control unit, at least one DC/DC conversion circuit, and an inverter circuit, wherein
the DC/DC conversion circuit is configured to: adjust a direct current that is input to the DC/DC conversion circuit, and then output an adjusted direct current to the inverter circuit; and the inverter circuit is configured to: receive a direct current that is output by the at least one DC/DC conversion circuit, and convert the received direct current into an alternating current;
one temperature detection unit is correspondingly configured for at least one first power transistor in each DC/DC conversion circuit;
the temperature detection unit is disposed on a same PCB as the first power transistor corresponding to the temperature detection unit, and is configured to: detect a temperature of the first power transistor, and feed back temperature information of the first power transistor to the sampling control unit; and
the sampling control unit is configured to perform, based on the temperature information of the first power transistor, output power control on the DC/DC conversion circuit in which the first power transistor is located.

9. The inverter according to claim 8, wherein
one temperature detection unit is correspondingly configured for at least one second power transistor in the inverter circuit;
the temperature detection unit is disposed on a same PCB as the second power transistor corresponding to the temperature detection unit, and is configured to: detect a temperature of the second power transistor, and feed back temperature information of the second power transistor to the sampling control unit; and
the sampling control unit is configured to perform output power control on a part or all of the at least one DC/DC conversion circuit based on the temperature information of the second power transistor.

10. The inverter according to claim 8, wherein the sampling control unit is configured to:
when the temperature of the first power transistor exceeds a first temperature threshold, the temperature of the first power transistor exceeds a second temperature threshold and is less than a first temperature threshold for a continuous period of time, or a temperature change of the first power transistor in a unit time exceeds a sudden change threshold, control the DC/DC conversion circuit in which the first power transistor is located to reduce output power, wherein the first temperature threshold is greater than the second temperature threshold.

11. The inverter according to claim 9 or 10, wherein the sampling control unit is configured to:
when the temperature of the second power transistor exceeds the first temperature threshold, the temperature of the second power transistor exceeds the second temperature threshold and is less than the first temperature threshold for a continuous period of time, or a temperature change of the second power transistor in a unit time exceeds the sudden change threshold, control the part or all of the at least one DC/DC conversion circuit to reduce output power, wherein the first temperature threshold is greater than the second temperature threshold.

12. The inverter according to claim 11, wherein the sampling control unit is configured to:
when the temperature of the second power transistor exceeds the first temperature threshold, control all of the at least one DC/DC conversion circuit to reduce output power; or
when the temperature of the second power transistor exceeds the second temperature threshold and is less than the first temperature threshold for a continuous period of time, or when the temperature change of the second power transistor in the unit time exceeds the sudden change threshold, control a DC/DC conversion circuit in which the temperature of the first power transistor exceeds a third temperature threshold among the at least one DC/DC conversion circuit to reduce output power, wherein the third temperature threshold is less than the second temperature threshold.

13. An inverter derating method, wherein
the inverter comprises at least one temperature detection unit, a sampling control unit, at least one DC/DC conversion circuit, and an inverter circuit, and one temperature detection unit is correspondingly configured for at least one first power transistor in each circuit of the at least one DC/DC conversion circuit; and
the method comprises:
detecting, by the temperature detection unit, a temperature of the first power transistor corresponding to the temperature detection unit;
feeding back, by the temperature detection unit, the temperature that is of the corresponding power transistor and that is detected by the temperature detection unit to the sampling control unit; and
performing, by the sampling control unit based on temperature information of the power transistor, output power control on the DC/DC conversion circuit in which the first power transistor is located.

14. The method according to claim 13, wherein
when the temperature of the first power transistor exceeds a first temperature threshold, the temperature of the power transistor exceeds a second temperature threshold and is less than a first temperature threshold for a continuous period of time, or a temperature change of the power transistor in a unit time exceeds a sudden change threshold, controlling, by the sampling control unit, the DC/DC conversion circuit in which the first power transistor is located to reduce output power, wherein the first temperature threshold is greater than the second temperature threshold.

15. The method according to claim 13 or 14, wherein when a temperature of the second power transistor exceeds the first temperature threshold, the temperature of the power transistor exceeds the second temperature threshold and is less than the first temperature threshold for a continuous period of time, or a temperature change of the power transistor in a unit time exceeds the sudden change threshold, controlling, by the sampling control unit, a part or all of the at least one DC/DC conversion circuit to reduce output power, wherein the first temperature threshold is greater than the second temperature threshold.

16. The method according to claim 15, wherein
when the temperature of the second power transistor exceeds the first temperature threshold, controlling, by the sampling control unit, all of the at least one DC/DC conversion circuit to reduce output power; or
when the temperature of the power transistor exceeds the second temperature threshold and is less than the first temperature threshold for a continuous period of time, or when the temperature change of the power transistor in the unit time exceeds the sudden change threshold, controlling a DC/DC conversion circuit in which the temperature of the first power transistor exceeds a third temperature threshold among the at least one DC/DC conversion circuit to reduce output power, wherein the third temperature threshold is less than the second temperature threshold.
